# EUROPÄISCHE PATENTSCHRIFT

(11) **EP 0 795 371 B1**
(45) Veröffentlichungstag und Bekanntmachung des Hinweises auf die Patenterteilung: **10.11.1999**
(21) Anmeldenummer: 97101256.2
(22) Anmeldetag: 28.01.1997
(51) Int. Cl.: B23K 9/32

(54) **Schutzgasband zur Gasbeflutung des Schweissfugenbereiches von miteinander zu verschweissenden gekrümmten Behälterteilen oder Rohren**
Inert gas enclosure for gas flooding into bent vessel parts or pipes to be welded
Zone de gaz inerte permettant l'amenée à des tubes ou parties de réservoir courbées devant être soudés de cedit gaz

(30) Priorität: 13.03.1996 DE 19609760
(43) Veröffentlichungstag der Anmeldung: 17.09.1997
(73) Patentinhaber: Jankus, Werner, D-58313 Herdecke (DE)
(72) Erfinder: Jankus, Werner, D-58313 Herdecke (DE)
(74) Vertreter: Niemann, Uwe, Dr.-Ing.

(56) Entgegenhaltungen:
- EP-A- 0 592 055
- DE-U- 8 807 145
- US-A- 3 095 844

## Beschreibung

Die Erfindung betrifft ein Schutzgasband zur Gasbeflutung des Schweißfugenbereiches von miteinander zu verschweißenden gekrümmten Behälterteilen oder Rohren, mit zwei beidseits der Schweißfuge anbringbaren elastisch nachgiebigen Dichtleisten und einem die Dichtleisten verbindenden Träger sowie einer zwischen den Dichtleisten mündenden Schutzgaszufuhr. - Bei der Herstellung von hochwertigen Rohrschweißverbindungen an niedrig- oder hochlegierten Stählen wird üblicherweise dem Schweißfugenbereich ein Schutzgas zugeführt, welches das Verzundern der Schweißnaht und der Übergangszonen verhindert. Dabei ist eine zuverlässige Abdichtung des mit Schutzgas befluteten Raumes gegen die Atmosphäre von besonderer Bedeutung, weil bereits geringste Sauerstoffmengen die Qualität der hergestellten Schweißnaht und der daran anschließenden Übergangszonen beeinträchtigen können.

Bei einem Schutzgasband der eingangs beschriebenen Gattung besteht der Träger aus einem quer zur Längsrichtung des Trägers profilierten und in Längsrichtung gewellten, somit starren Blechabschnitt, der in Längsrichtung auch gekrümmt sein kann (EP 03 48 125). Mit diesem Schutzgasband können nur Schweißfugenbereiche begrenzter Länge abgedeckt werden. Bei einer anderen Ausführung besteht der Träger aus mehreren in Längsrichtung hintereinander angeordneten und durch Gelenke miteinander verbundenen Segmenten mit Dichtleisten, die ebene Auflageflächen aufweisen (DD 227 366). Auch mit diesem Schutzgasband können nur Schweißfugenbereiche begrenzter Länge abgedeckt werden, wobei gekrümmte Schweißfugenbereiche nur insoweit abgedeckt werden können, als die Dichtleisten sich der Krümmung anpassen können. Die Dichtleisten bestehen üblicherweise aus einem hitzebeständigen Textil mit Fasern aus Glas und/oder Keramik, oder sie bestehen aus einem hitzebeständigen Elastomer, insbesondere einem Silikon- oder Fluorkautschuk.

Im übrigen kennt man Vorrichtungen zur Gasbeflutung von zwei miteinander zu verschweißenden Rohren mit einem in den zu beflutenden Rohrabschnitt einführbaren Körper aus kleinporigem Material, einer daran anschließenden Gaszuführung und mit beidseits des Körpers angeordneten, gegen das Rohrinnere abdichtenden, nachgiebigen Stützscheiben (DE 37 28 184). Auch bei dieser Vorrichtung ist der Träger ein rohrförmiges oder kreisringförmiges, starres Gerüst, so daß eine Vorrichtung nur für bestimmte Rohrdurchmesser einsetzbar ist. Im übrigen kann die Vorrichtung nach Fertigstellung der Schweißnaht aus dem Rohr herausgezogen werden.

Die Praxis verlangt häufig Behälter, die aus zumindest zwei miteinander verschweißten Behälterhälften bestehen und die lediglich Behälteröffnungen aufweisen, deren Größe kleiner ist als die Größe üblicher Mannlöcher. Dann können die Behälterhälften nur von außen miteinander verschweißt werden. Die bekannten Vorrichtungen für die Gasbeflutung oder Schutzgasbänder können dann nicht mehr aus dem Behälterinneren entfernt werden.

Dementsprechend liegt der Erfindung die Aufgabe zugrunde, ein Schutzgasband der eingangs beschriebenen Gattung so zu verbessern, daß es leicht an die Krümmung von Schweißfugenbereichen angepaßt werden kann und nach Fertigstellung der Schweißnaht auch leicht wieder entfernt werden kann, insbesondere auch durch verhältnismäßig kleine Behälteröffnungen aus einem ansonsten geschlossenen Behälter entfernt werden kann.

Diese Aufgabe wird dadurch gelöst, daß der Träger ein langgestreckter, ebener Materialstreifen ist, der um seine Längsachse tordierbar sowie quer zu seiner Längsachse elastisch biegbar ist und an dessen Längsrändern die Dichtleisten befestigt sind. Der Materialstreifen kann ein Federband, vorzugsweise aus Edelstahl, sein. Der Materialstreifen kann formschlüssig und/oder kraftschlüssig mit den Dichtleisten verbunden sein. Der Materialstreifen und die Dichtleisten können aber auch einstückig aus einem hitzbeständigen Material, vorzugsweise Silikonkautschuk, geformt sein. - Ein solches Schutzgasband paßt sich beim Verlegen vorhandenen Krümmungen des Schweißfugenbereiches an und gewährleistet auch die notwendige Abdichtung zwischen dem zwischen den Dichtleisten gebildeten Schutzgasraum und der Atmosphäre. Das Schutzgasband besitzt einen verhältnismäßig kleinen Querschnitt und kann deshalb, wenn es im Inneren eines Behälters verlegt ist, nach Fertigstellung der Schweißnaht auch durch eine verhältnismäßig kleine Behälteröffnung entfernt werden, weil sein Materialstreifen und natürlich auch die Dichtleisten in weitem Umfang elastisch verformbar sind. Dazu kann der Materialstreifen außenseitig im Bereich eines seiner Enden einen Anschluß für ein Zugelement aufweisen, das z.B. durch die Behälteröffnung herausgeführt ist.

Soll das Schutzgasband innerhalb eines Rohres oder Behälters als Kreisring verlegt werden, dann ist es zweckmäßig, wenn der Materialstreifen außenseitig im Bereich seiner Enden Verbindungselemente aufweist, die die zu einem Stoß zusammengeführten Enden gegenseitig fixieren. Das kann insbesondere dadurch erfolgen, daß an jedem Ende des Materialstreifens eine Öse mit quer zur Längserstreckung des Materialstreifens gerichteter Öffnung angeordnet ist, daß eine Klammer vorgesehen ist, deren Gabel enden in die Öffnungen der Ösen einsetzbar sind und daß die Klammer mit einem Zugelement versehen ist. Nach Fertigstellung der Schweißnaht kann dann die Klammer mit Hilfe des Zugelementes aus den Ösen herausgezogen werden, so daß die beiden Enden des Schutzgasbandes frei werden, und kann das Schutzgasband mit Hilfe des am Materialstreifen befestigten Zugbandes aus dem Rohr oder dem Behälter herausgezogen werden.

Eine hinreichende Abdichtung im Stoßbereich der Enden eines kreisförmig verlegten Schutzgasbandes wird häufig schon durch die Eigenspannung des verlegten Schutzgasbandes erreicht, durch die die stirnseitigen Stoßkanten gegeneinander gedrückt werden. Die Abdichtung im Stoßbereich kann aber verbessert werden, wenn die Dichtleisten an ihren Enden einander zugeordnete Vorsprünge und Ausnehmungen aufweisen, die beim Zusammenfügen der Enden des Schutzgasbandes einen Überlappungsstoß bilden.

Selbstverständlich ist es auch möglich, einen vom Materialstreifen und den Dichtleisten definierten Schutzgasraum durch stirnseitige Wandungen zu schließen.

Für die Schutzgaszufuhr kann im Bereich des Materialstreifens ein Anschlußelement vorgesehen sein, das in einen innenseitig am Materialstreifen angeordneten, über seine Länge für Schutzgas durchlässigen Schlauch mündet. Bei einer anderen Ausführung kann die Schutzgaszufuhr im Bereich einer der Dichtleisten ein Anschlußelement aufweisen, das in einen in dieser Dichtleiste vorhandenen Kanal mündet, wobei vom Kanal Bohrungen oder Schlitze ausgehen, die an der der anderen Dichtleiste zugewandten Außenseite der Dichtleiste münden.

Zur Verbesserung der Haftung des Schutzgasbandes an der Rohr- oder Behälterwandung können die Dichtleisten unterseitig zwei mit gegenseitigem Abstand angeordnete und sich in Längsrichtung der Dichtleisten erstreckende Dichtlippen aufweisen, wobei die Dichtleisten jeweils einen längslaufenden Kanal aufweisen, der über Bohrungen oder Schlitze mit einem Abstandsraum zwischen den Dichtlippen verbunden ist und der an eine Unterdruckquelle anschließbar ist. Nach dem Anschließen der Unterdruckquelle wird das Schutzgasband durch Unterdruck an der betreffenden Wandung gehalten. Grundsätzlich besteht aber auch die Möglichkeit, das Schutzgasband in an sich bekannter Weise mit Bügeln, die mit Unterdruck oder durch Magnetkräfte an der betreffenden Wandung fixierbar sind, zu sichern.

Eine montagefreundliche Ausführung ist dadurch gekennzeichnet, daß die Dichtleisten unterseitig eine einzige längslaufende Dichtlippe aufweisen. Dabei kann die Dichtlippe in einer Projektion auf den Materialstreifen unter dem Anschlußbereich zwischen Materialstreifen und Dichtleiste angeordnet sein, Im Hinblick auf Montagefreundlichkeit ist eine bevorzugte Ausführung der Erfindung dadurch gekennzeichnet, daß die Dichtlippe in einer Projektion auf den Materialstreifen neben dem Anschlußbereich zwischen Materialstreifen und Dichtleiste angeordnet ist. Eine solche Dichtlippe ist in weitem Umfang verformbar und nimmt auch dann ihre vorbestimmte Lage ein, wenn der Schutzgasstreifen zum Beispiel zunächst mit einer Dichtleiste in einer Behälterhälfte angebracht wird und danach die zweite Behälterhälfte über die zweite Dichtleiste gesetzt wird.

Im folgenden werden in der Zeichnung dargestellte Ausführungsbeispiele der Erfindung erläutert: es zeigen:
- Figur 1: einen Längsschnitt durch einen Behälter oder ein Rohr mit einem darin angeordneten Schutzgasband,
- Figur 2: einen Schnitt in Richtung II-II durch den Gegenstand nach Figur 1,
- Figur 3: eine andere Ausführung des Gegenstandes nach Figur 1,
- Figur 4: einen Schnitt in Richtung IV-IV durch den Gegenstand nach Figur 3,
- Figur 5: eine andere Ausführung des Gegenstandes nach Figur 1,
- Figur 6: einen Schnitt in Richtung VI-VI durch den Gegenstand nach Figur 5,
- Figur 7: eine andere Ausführung des Gegenstandes nach Figur 1,
- Figur 8: einen Schnitt in Richtung VIII-VIII durch den Gegenstand nach Figur 7
- Figur 9: eine andere Ausführung des Gegenstandes nach Figur 1,
- Figur 10: einen Schnitt in Richtung X-X durch den Gegenstand nach Figur 9,
- Figur 11: eine andere Ausführung des Gegenstandes nach Figur 1,
- Figur 12: einen Schnitt in Richtung XII-XII durch den Gegenstand nach Figur 11,
- Figur 13: eine andere Ausführung des Gegenstandes nach Figur 1,
- Figur 14: einen Schnitt in Richtung XIV-XIV durch den Gegenstand nach Figur 13,
- Figur 15: einen Radialschnitt durch einen Behälter oder ein Rohr mit einem darin angeordneten Schutzgasband,
- Figur 16: einen Schnitt in Richtung XVI-XVI durch den Gegenstand nach Figur 15.

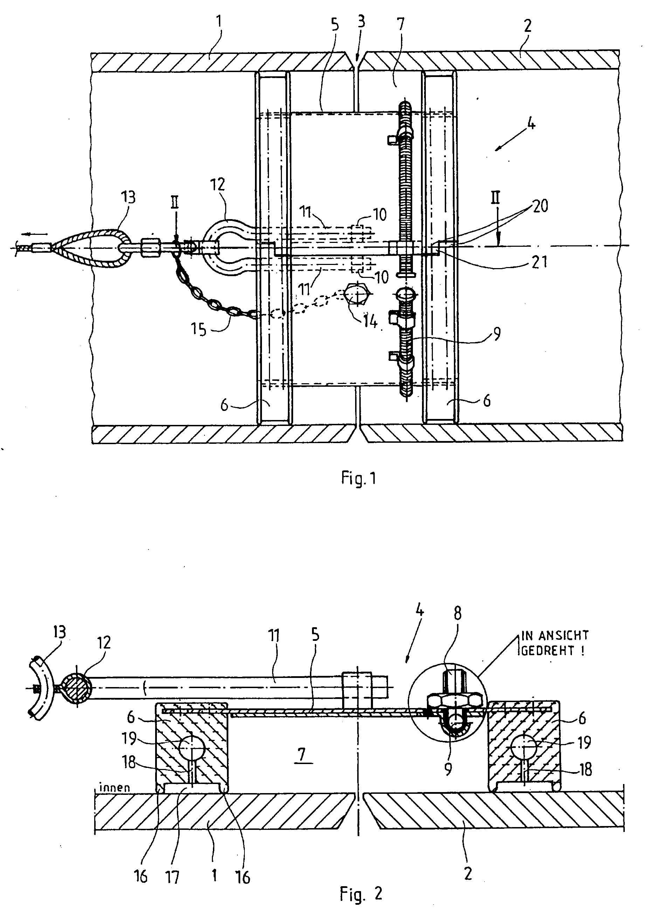

In den Figuren 1 und 2 erkennt man zwei miteinander zu verschweißende Rohrenden 1, 2, die zwischen sich eine Schweißfuge 3 bilden. Bei den Rohrenden kann es sich auch um Teile eines Behälters handeln, Innenseitig längs der Schweißfuge ist ein Schutzgasband 4 verlegt, das aus einem langgestreckten, ebenen Materialstreifen 5 besteht, an dessen Längsrändern Dichtleisten 6 befestigt sind. Der Materialstreifen 5 ist ein Federband aus Edelstahl, so daß er elastisch biegbar und um seine Längsachse tordierbar ist, Der Materialstreifen 5 und die Dichtleisten 6 bilden zusammen mit den Rohrenden 1, 2 einen Schutzgasraum 7, dem das Schutzgas zugeführt wird über ein Anschlußelement 8, das in einen innenseitig am Materialstreifen 5 angeordneten, über seine Länge für Schutzgas durchlässigen Schlauch 9 mündet.

Der Materialstreifen 5 weist auf der dem Schutzgasraum 7 abgewandten Seite im Bereich seiner beider Enden Ösen 10, deren Öffnungen quer zur Längserstreckung des Materialstreifens 5 gerichtet sind und in die Gabelenden 11 einer Klammer 12 einfassen, die mit einem Zugelement 13 verbunden ist. Mit der Klammer 12 werden die beiden Enden des längs der Schweißfuge 3 verlegten Schutzgasbandes 4 aneinander fixiert.

Ein Ende des Materialstreifens 5 weist außerdem auf der dem Schutzgasraum 7 abgewandten Seite eine weitere Öse 14 als Anschlußelement für ein weiteres Zugelement 15 auf.

Die Dichtleisten 6 bestehen bei der in Figuren 1 und 2 wiedergegebenen Ausführung aus einem hitzebeständigem Silikon- oder Fluorkautschuk. Sie sind materialschlüssig an die Längsränder des Materialstreifens 5 angeformt. Jede Dichtleiste 6 weist auf ihrer dem Rohrende 1 bzw. 2 zugewandten Seite zwei mit gegenseitigem Abstand angeordnete Dichtlippen 16 auf, die zwischen sich einen Abstandsraum 17 definieren. Vom Abstandsraum 17 gehen Schlitze oder Bohrungen 18 aus, die in einen Kanal 19 münden, der sich längs der Dichtleiste 6 erstreckt und der in nicht dargestellter Weise mit einer Unterdruckquelle verbindbar ist.

Die Dichtleisten 6 weisen an ihren Enden einander zugeordnete Vorsprünge 20 und Ausnehmungen auf, die beim Zusammenfügen der Enden des Schutzgasbandes 4 einen Überlappungsstoß 21 bilden,

Das Schutzgasband 4 wird in der dargestellten Weise unterhalb der Schweißfuge 3 angeordnet, wobei seine beiden Enden mit Hilfe der Klammer 12 verriegelt werden. Die Kanäle 19 der Dichtleisten 6 werden an eine nicht dargestellte Unterdruckquelle angeschlossen, so daß sich die Dichtleisten 6 an der Wandung der Rohrenden 1, 2 bzw. entsprechender Behälterteile festsaugen. Dann wird über das Anschlußelement 8 Schutzgas zugeführt, das sich wegen der Durchlässigkeit des Schlauches 9 gleichmäßig im Schutzgasraum 7 verteilt. Wenn sichergestellt ist, daß der Schutzgasraum 7 vollständig mit Schutzgas gefüllt ist, wird die Schweißung ausgeführt. Nach Fertigstellung der Schweißnaht wird die Schutzgaszufuhr beendet und wird der Unterdruck in den Kanälen 19 aufgehoben. Dann wird mit Hilfe des Zugelementes 13 die Klammer 12 aus den Ösen 10 herausgezogen, so daß die Enden des Schutzgasbandes 4 frei sind. Mit Hilfe des an ein Ende des Schutzgasbandes 4 angeschlossenen Zugelementes 5 kann nunmehr das Schutzgasband 4 ebenfalls entfernt werden, wobei es sich nach Maßgabe der gegebenen lokalen Verhältnisse elastisch verformen und dabei auch tordieren kann. Dadurch besteht die Möglichkeit, das Schutzgasband 4 z.B. auch durch verhältnismäßig kleine Behälteröffnungen aus einem ansonsten allseitig geschlossenen Behälter herauszuziehen.

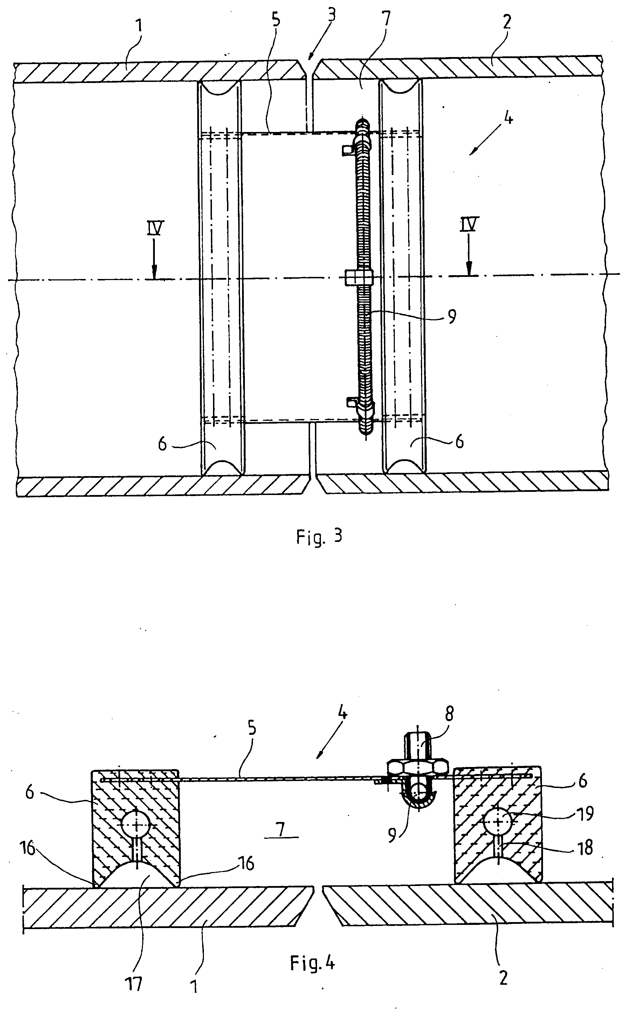

In den Figuren 3 bis 16 sind die Ösen 10, 14, die Klammer 12 und die Zugelemente 13, 15 sowie der Überlappungsstoß 21 nicht gezeichnet.

Bei der in den Figuren 3 und 4 dargestellten Ausführung bezeichnen gleiche Bezugszeichen gleiche Teile. Die Dichtlippen 16 der Dichtleisten 6 haben einen dreieckförmigen Querschnitt mit auslaufender Spitze, die auf der Rohrwandung abgestützt ist. Sie sind deswegen leichter verformbar.

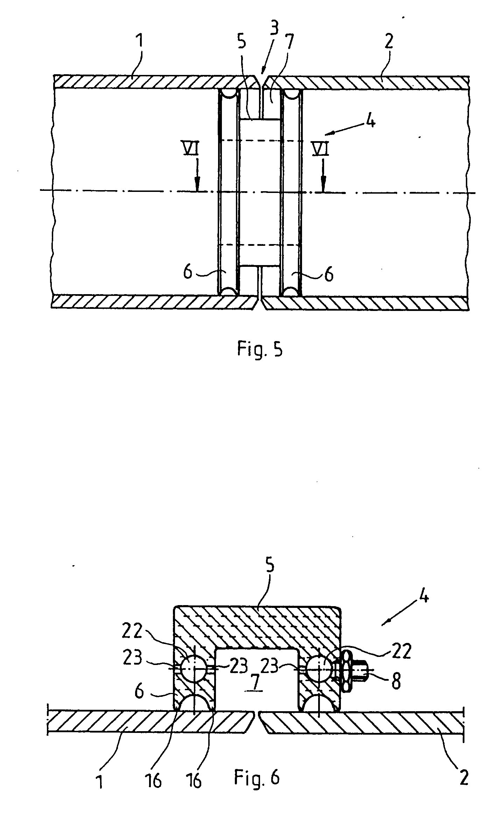

Bei der in den Figuren 5 und 6 wiedergegebenen Ausführung bezeichnen gleiche Bezugszeichen gleiche Teile. Der Materialstreifen 5 und die Dichtleisten 6 sind einstückig aus einem hitzbeständigen Silikon- oder Fluorkautschuk geformt. Das Anschlußelement 8 für die Schutzgaszufuhr ist an der Außenseite einer Dichtleiste 6 angeordnet und mündet in einen Schutzgaskanal 22 dieser Dichtleiste 6, der über Schlitze oder Bohrungen 23 mit dem Schutzgasraum 7 verbunden ist. Die andere Dichtleiste 6 weist ebenfalls einen längslaufenden Schutzgaskanal 22 auf, der über Schlitze oder Bohrungen 23 sowohl mit dem Schutzgasraum 7 als auch mit der Außenseite dieser Dichtleiste 6 in Verbindung steht, so daß überflüssiges Schutzgas darüber abfließen kann.

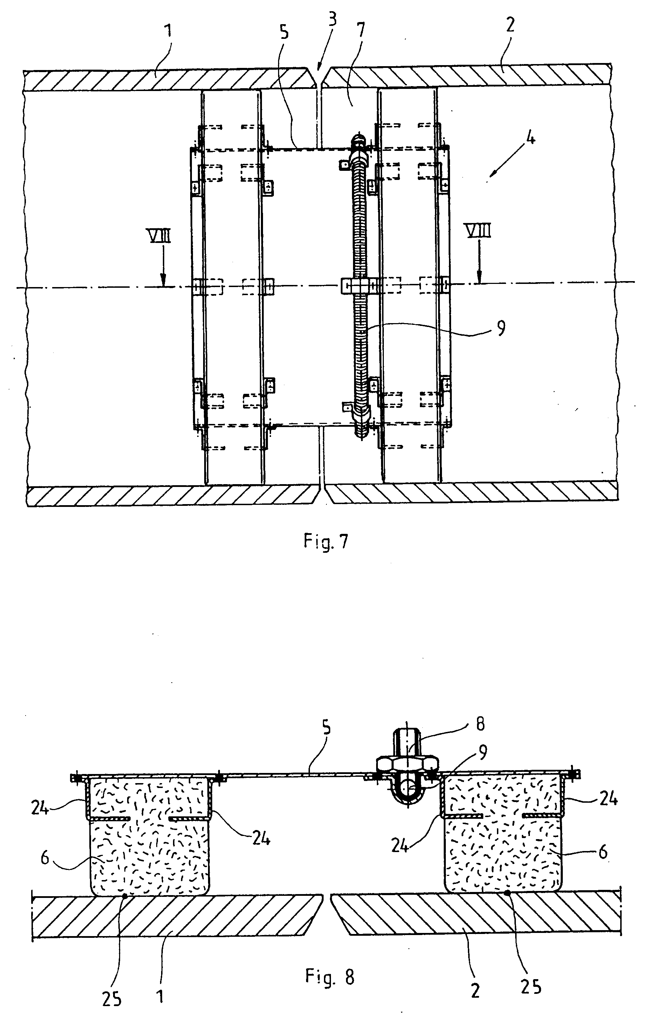

Bei der in den Figuren 7 und 8 wiedergegebenen Ausführung bezeichnen gleiche Bezugszeichen gleiche Teile. Der Materialstreifen 5 ist wiederum ein Federband aus Edelstahl. Die Dichtleisten 6 bestehen aus textilem Material aus Glas und/oder Keramikfasern. Sie sind mit Hilfe von winkelförmigen Halteelementen 24 an den Längsrändern des Materialstreifens 5 befestigt. Im übrigen liegen die Dichtleisten 6, die einen rechteckigen bis quadratischen Querschnitt aufweisen, mit einer Seite 25 an den zugeordneten Wandungen der Rohrenden 1, 2 an.

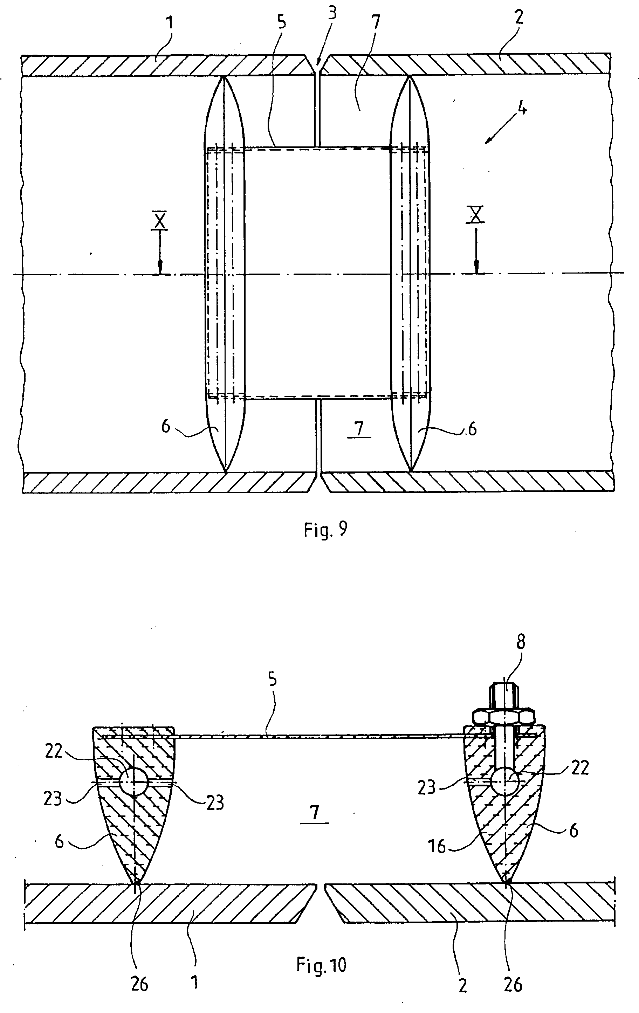

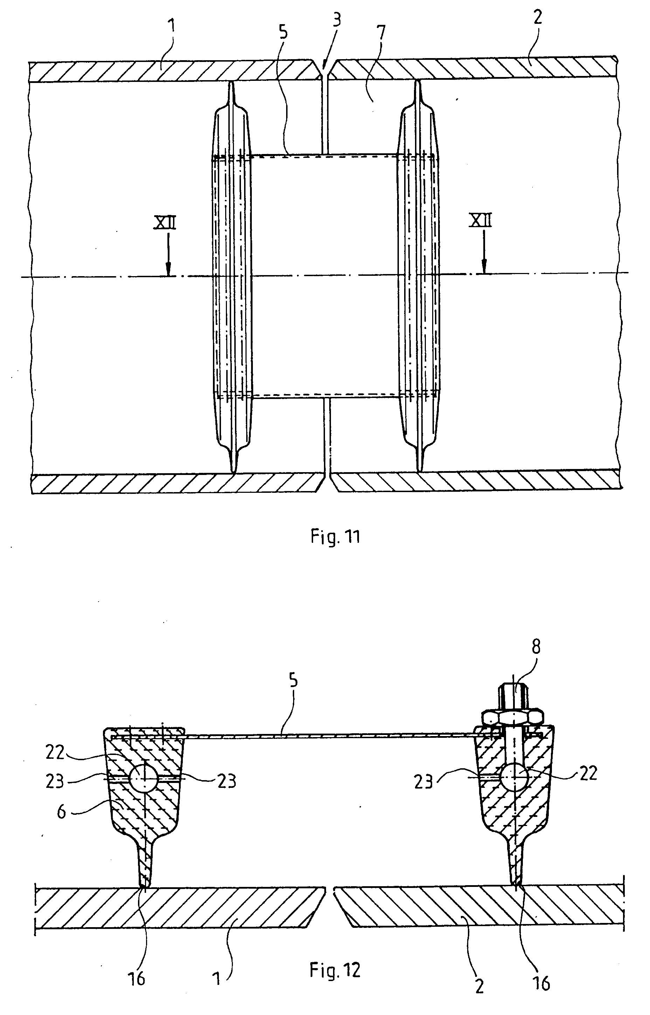

Bei der in den Figuren 9 und 10 dargestellten Ausführung bezeichnen gleiche Bezugszeichen gleiche Teile. Die materialschlüssig mit dem Materialstreifen 5 verbundenen Dichtleisten 6 bestehen aus hitzebeständigem Silikon- oder Fluorkautschuk und besitzen einen im wesentlichen dreieckförmigen Querschnitt, dessen eine Spitze 26 mit der Wandung des zugeordneten Rohrendes 1 bzw. 2 abdichtet. Das Anschlußelement 8 befindet sich in einer Projektion auf den Materialstreifen 5 gesehen senkrecht über der Spitze 26 und mündet in einen Schutzgaskanal 22 der Dichtleiste 6. Dieser Schutzgaskanal ist über Schlitze oder Bohrungen mit dem Schutzgasraum 7 verbunden. Die andere Dichtleiste 6 weist eine entsprechende Anordnung mit zusätzlichen, zur Außenseite der Dichtleiste 6 mündenden Bohrungen zum Abfließen überschüssigen Schutzgases auf.

Die in den Figuren 11 und 12 wiedergegebene Ausführung entspricht im wesentlichen der Ausführung in den Figuren 9 und 10, mit der Maßgabe, daß die Dichtleisten 6 einen trapezförmigen Querschnitt aufweisen, wobei von einer Trapezseite eine Dichtlippe 16 ausgeht, die mit der zugeordneten Wandung des Rohrendes 1 bzw. 2 dichtet.

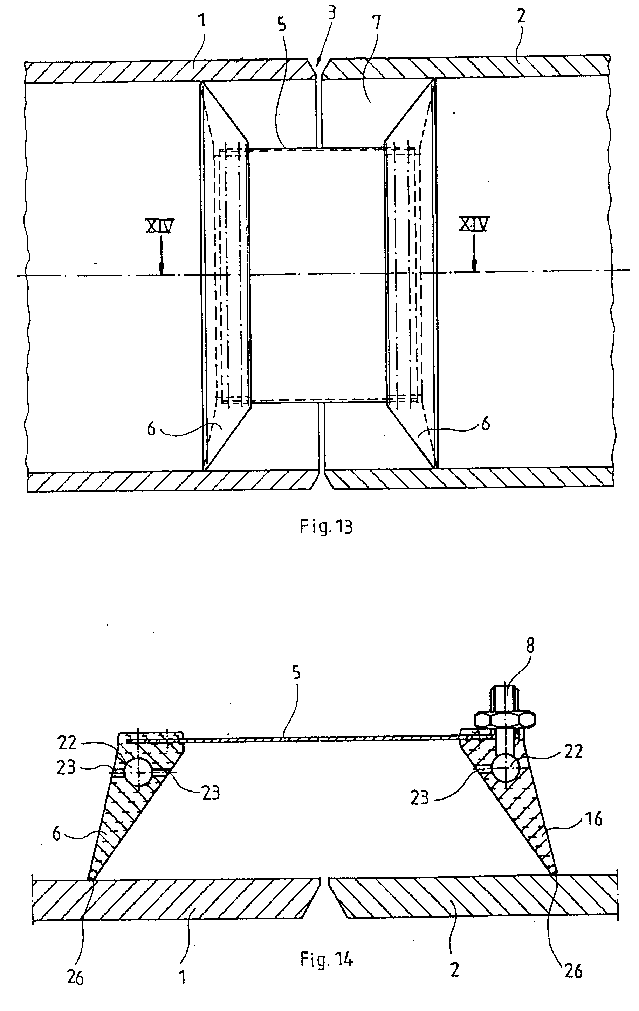

Auch die in den Figuren 13 und 14 wiedergegebene Ausführung entspricht im wesentlichen der Ausführung der Figuren 9 und 10, mit der Maßgabe, daß die Dichtleisten Querschnitte in Form unregelmäßiger Dreiecke besitzen, deren mit den Wandungen der Rohrenden 1, 2 abdichtende Spitzen 26 in einer Projektion auf den Materialstreifen 5 neben dem Materialstreifen 5 angeordnet sind.

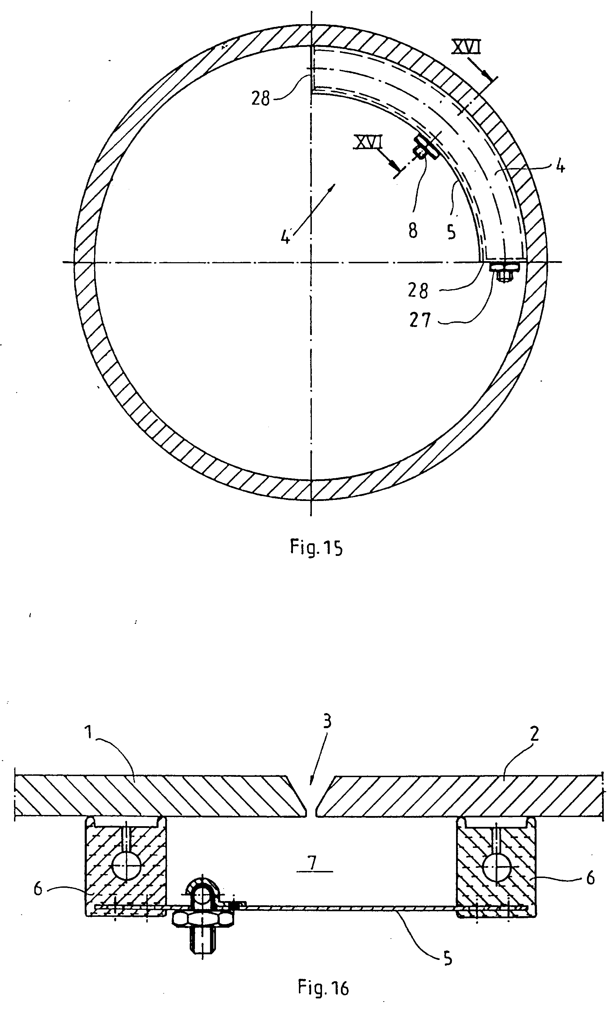

Die Figuren 15 und 16 zeigen eine Ausführung mit einem Schutzgasband 4, welches nur einen Teilabschnitt einer Schweißfuge abdeckt, Das Schutzgasband 4 ist im wesentlichen aufgebaut wie das in Zusammenhang mit den Figuren 1 und 2 beschriebene Schutzgasband 4, mit der Maßgabe, daß die stirnseitigen Enden des Schutzgasbandes 4 durch Wandungen 28 geschlossen sind und daß eine dieser Wandungen 28 einen mit einer Drossel versehenen Gasauslaß 27 aufweist.

Nicht dargestellt ist, daß alle Ausführungen des Schutzgasbandes nicht nur innenseitig, sondern auch außenseitig an Rohrenden oder Behälterteilen angeordnet werden können und gegebenenfalls in an sich bekannter Weise mit Bügeln sowie mit Unterdruck oder Magnetkraft an den zugeordneten Wandungen gehalten werden können.

## Patentansprüche

1. Schutzgasband zur Gasbeflutung des Schweißfugenbereiches von miteinander zu verschweißenden gekrümmten Behalterteilen oder Rohren (1,2), mit zwei beidseits der Schweißfuge anbringbaren elastisch nachgiebigen Dichtleisten (6) und einem die Dichtleisten (6) verbindenden Träger (5) sowie einer zwischen den Dichtleisten (6) mündenden Schutzgaszufuhr (8), **dadurch gekennzeichnet,** daß der Träger ein langgestreckter, ebener Materialstreifen (5) ist, der um seine Längsachse tordierbar sowie quer zu seiner Längsachse elastisch biegbar ist und an dessen Längsrändern die Dichtleisten (6) befestigt sind.

2. Schutzgasband nach Anspruch 1, **dadurch gekennzeichnet,** daß der Materialstreifen (5) ein Federband ist.

3. Schutzgasband nach Anspruch 1 oder 2, **dadurch gekennzeichnet,** daß der Materialstreifen (5) aus Edelstahl besteht.

4. Schutzgasband nach einem der Ansprüche 1 bis 3, **dadurch gekennzeichnet,** daß der Materialstreifen (5) formschlüssig und/oder kraftschlüssig mit den Dichtleisten (6) verbunden ist.

5. Schutzgasband nach Anspruch 1, **dadurch gekennzeichnet,** daß der Materialstreifen (5) und die Dichtleisten (6) einstückig aus einem hitzebeständigen Material, vorzugsweise Silikonkautschuk, geformt sind.

6. Schutzgasband nach einem der Ansprüche 1 bis 5, **dadurch gekennzeichnet,** daß der Materialstreifen (5) außenseitig im Bereich eines seiner Enden einen Anschluß für ein Zugelement (15) aufweist.

7. Schutzgasband nach einem der Ansprüche 1 bis 6, **dadurch gekennzeichnet,** daß der Materialstreifen (5) außenseitig im Bereich seiner Enden Verbindungselemente (10, 11, 12) aufweist, die die zu einem Stoß zusammengefügten Enden gegenseitig fixieren.

8. Schutzgasband nach Anspruch 7, **dadurch gekennzeichnet,** daß an jedem Ende des Materialstreifens (5) eine Öse (10) mit quer zur Längserstreckung des Materialstreifens (5) gerichtete Öffnung angeordnet ist, daß eine Klammer (12) vorgesehen ist, deren Gabelenden (11) in die Öffnungen der Ösen (10) einsetzbar sind und daß die Klammer (12) mit einem Zugelement (13) versehen ist.

9. Schutzgasband nach einem der Ansprüche 1 bis 8, **dadurch gekennzeichnet,** daß die Dichtleisten an ihren Enden einander zugeordnete Vorsprünge (20) und Ausnehmungen aufweisen, die beim Zusammenfügen der Enden des Schutzgasbandes einen Überlappungsstoß (21) bilden.

10. Schutzgasband nach einem der Ansprüche 1 bis 9, **dadurch gekennzeichnet,** daß ein vom Materialstreifen (5) und den Dichtleisten (6) definierter Schutzgasraum (7) durch stirnseitige Wandungen (28) geschlossen ist.

11. Schutzgasband nach einem der Ansprüche 1 bis 10, **dadurch gekennzeichnet,** daß die Schutzgaszufuhr im Bereich des Materialstreifens (5) ein Anschlußelement (8) aufweist, das in einen innenseitig am Materialstreifen (5) angeordneten und über seine Länge für Schutzgas durchlässigen Schlauch (9) mündet.

12. Schutzgasband nach einem der Ansprüche 1 bis 10, **dadurch gekennzeichnet,** daß die Schutzgaszufuhr im Bereich einer der Dichtleisten (6) ein Anschlußelement (8) aufweist, das in einen in dieser Dichtleiste (6) vorhandenen Kanal (22) mündet, und daß vom Kanal (22) Schlitze oder Bohrungen (23) ausgehen, die an der der anderen Dichtleiste (6) zugewandten Außenseite der Dichtleiste (6) münden.

13. Schutzgasband nach einem der Ansprüche 1 bis 10, **dadurch gekennzeichnet,** daß die Dichtleisten (6) unterseitig zwei mit gegenseitigem Abstand angeordnete und sich in Längsrichtung der Dichtleisten (6) erstreckende Dichtlippen (16) aufweisen und daß die Oichtleisten (6) jeweils einen langslaufenden Kanal (19) aufweisen, der über Schlitze oder Bohrungen (18) mit einem Abstandsraum (17) zwischen den Dichtlippen (16) verbunden ist und der an eine Unterdruckquelle anschließbar ist.

14. Schutzgasband nach einem der Ansprüche 1 bis 12, **dadurch gekennzeichnet,** daß die Dichtleisten (6) unterseitig eine einzige längslaufende Dichtlippe (16) aufweisen.

15. Schutzgasband nach Anspruch 14, **dadurch gekennzeichnet,** daß die Dichtlippe (16) in einer Projektion auf den Materialstreifen (5) unter dem Anschlußbereich zwischen Materialstreifen (5) und Dichtleiste (6) angeordnet ist.

16. Schutzgasband nach Anspruch 14, **dadurch gekennzeichnet,** daß die Dichtlippe (16) in einer Projektion auf den Materialstreifen (5) neben dem Anschlußbereich zwischen Materialstreifen (5) und Dichtleiste (6) angeordnet ist.

## Claims

1. Protective gas strip for gas flooding of the weld gap region of curved container parts or pipes (1, 2) to be welded together, with two elastically flexible sealing strips (6) mountable at both sides of the weld gap and a support (5) connecting the sealing strips (6) as well as a protective gas feed (8) opening between the sealing strips (6), characterised in that the support is an elongate flat material strip (5) which is twistable about its longitudinal axis as well as resiliently flexible transversely to its longitudinal axis and the sealing strips (6) are fastened to the longitudinal edges thereof.

2. Protective gas strip according to claim 1, characterised in that the material strip (5) is a spring band.

3. Protective gas strip according to claim 1 or 2, characterised in that the material strip (5) consists of high-grade steel.

4. Protective gas strip according to one of claims 1 to 3, characterised in that the material strip (5) is connected with the sealing strips (6) in shape-locking or force-locking manner.

5. Protective gas strip according to claim 1, characterised in that the material strip (5) and the sealing strips (6) are integrally formed from a heat-resistant material, preferably silicon rubber.

6. Protective gas strip according to one of claims 1 to 5, characterised in that the material strip (5) has at the outer side and in the region of one of its ends a connection for a pull element (15).

7. Protective gas strip according to one of claims 1 to 6, characterised in that the material strip (5) has at the outer side and in the region of its ends connecting elements (10, 11) which mutually fix the ends brought together into a butt joint.

8. Protective gas strip according to claim 7, characterised in that an eye (10) with an opening oriented transversely to the longitudinal extent of the material strip (5) is arranged at each end of the material strip (5), that a clamp (12) is provided, the fork ends (11) of which are insertable in the openings of the eyes (10), and that the clamp (12) is connected with a pull element (13).

9. Protective gas strip according to one of claims 1 to 8, characterised in that the sealing strips have at their ends mutually associated projections (20) and recesses which form an overlap butt joint (21) on bringing together of the ends of the protective gas strip.

10. Protective gas strip according to one of claims 1 to 9, characterised in that a protective gas space (7) defined by the material strip (5) and the sealing strips (6) is closed by end walls (28).

11. Protective gas strip according to one of claims 1 to 10, characterised in that the protective gas feed has in the region of the material strip (5) a connecting element (8) which opens into a hose (9), which is arranged at the inside at the material strip (5) and is permeable over its length for protective gas.

12. Protective gas strip according to one of claims 1 to 10, characterised in that the protective gas feed has in the region of one of the sealing strips (6) a connecting element (8) which opens into a channel (22) present in this sealing strip (6) and that slots or bores (23) go out from the channel (22) and open at the outer side, which faces the other sealing strip (6), of the sealing strip (6).

13. Protective gas strip according to one of claims 1 to 10, characterised in that the sealing strips (6) have at the underside two sealing lips (16) which are arranged at a mutual spacing and extend in the longitudinal direction of the sealing strips (6) and that the sealing strips (6) each have a respective longitudinally extending channel (19) which is connected with a spacer cavity (17) between the sealing lips (16) by way of slots or bores (18) and which is connectible with a source of underpressure.

14. Protective gas strip according to one of claims 1 to 12, characterised in that the sealing strips (6) have a single longitudinally extending sealing lip (6) at the underside.

15. Protective gas strip according to claim 14, characterised in that the sealing lip (16) is arranged in a projection on the material strip (5) under the connecting region between material strip (5) and sealing strip (6).

16. Protective gas strip according to claim 14, characterised in that the sealing lip (16) is arranged in a projection on the material strip (5) near the connecting region between material strip (5) and sealing strip (6).

## Revendications

1. Zone de gaz inerte permettant l'amenée à des tubes ou parties de réservoir (1, 2) courbées devant être soudés, présentant deux baguettes d'étanchéité (6) flexibles et élastiques et pouvant être appliquées des deux côtés de la rainure de soudage, un support (5) reliant les baguettes d'étanchéité (6), ainsi qu'une amenée de gaz inerte (8) débouchant entre les baguettes d'étanchéité (6), caractérisée en ce que le support est une bande de matériau (5) plane et allongée, qui peut être tordue autour de son axe longitudinal et peut être pliée de façon élastique transversalement à son axe longitudinal et aux bords longitudinaux de laquelle sont fixées les baguettes d'étanchéité (6).

2. Zone de gaz inerte selon la revendication 1, caractérisée en ce que la bande de matériau (5) est une bride de ressort.

3. Zone de gaz inerte selon la revendication 1 ou 2, caractérisée en ce que la bande de matériau (5) se compose d'acier spécial.

4. Zone de gaz inerte selon l'une des revendications 1 à 3, caractérisée en ce que la bande de matériau (5) est reliée par conjugaison de formes et/ou transmission d'efforts aux baguettes d'étanchéité (6).

5. Zone de gaz inerte selon la revendication 1, caractérisée en ce que la bande de matériau (5) et les baguettes d'étanchéité (6) sont formées en une pièce à partir d'un matériau résistant aux températures élevées, de préférence du caoutchouc siliconé.

6. Zone de gaz inerte selon l'une des revendications 1 à 5, caractérisée en ce que la bande de matériau (5) présente à l'extérieur, dans la zone d'une de ses extrémités, un raccord pour un élément de traction (15).

7. Zone de gaz inerte selon l'une des revendications 1 à 6, caractérisée en ce que la bande de matériau (5) présente à l'extérieur, dans la zone de ses extrémités, des éléments de raccord (10, 11, 12), qui fixent à l'opposé les extrémités rassemblées en une jointure.

8. Zone de gaz inerte selon la revendication 7, caractérisée en ce que, à chaque extrémité de la bande de matériau (5), est disposé un oeillet (10) présentant une ouverture orientée transversalement à la direction longitudinale de la bande de matériau (5), en ce qu'il est prévu une bride de fixation (12) dont les extrémités en fourche (11) peuvent être insérées dans les ouvertures des oeillets (10), et en ce que la bride de fixation (12) est pourvue d'un élément de traction (13).

9. Zone de gaz inerte selon l'une des revendications 1 à 8, caractérisée en ce que les baguettes d'étanchéité présentent au niveau de leurs extrémités des saillies (20) et des évidements coordonnés, qui forment une jointure de recouvrement (21) lors du rassemblement des extrémités de la zone de gaz inerte.

10. Zone de gaz inerte selon l'une des revendications 1 à 9, caractérisée en ce qu'un espace de gaz inerte (7) défini par la bande de matériau (5) et les baguettes d'étanchéité (6) est fermé par des parois (28) côté avant.

11. Zone de gaz inerte selon l'une des revendications 1 à 10, caractérisée en ce que l'amenée de gaz inerte présente un élément de raccord 8 dans la zone de la bande de matériau (5), lequel débouche dans un tuyau (9) disposé à l'intérieur contre la bande de matériau (5) et est perméable au gaz inerte sur sa longueur.

12. Zone de gaz inerte selon l'une des revendications 1 à 10, caractérisée en ce que l'amenée de gaz inerte présente un élément de raccord (8) dans la zone d'une des baguettes d'étanchéité (6), lequel débouche dans un canal (22) existant dans cette baguette d'étanchéité (6) et en ce que des rainures ou orifices (23) partent du canal (22) et débouchent contre l'extérieur de la baguette d'étanchéité (6) dirigée vers l'autre baguette d'étanchéité (6).

13. Zone de gaz inerte selon l'une des revendications 1 à 10, caractérisée en ce que les baguettes d'étanchéité (6) présentent dans la partie inférieure deux lèvres d'étanchéité (16) disposées avec un écartement réciproque et s'étendant dans la direction longitudinale des baguettes d'étanchéité (6), et en ce que les baguettes d'étanchéité (6) présentent respectivement un canal longitudinal (19) qui est relié par le biais de rainures ou orifices (18) à un espacement (17) entre les lèvres d'étanchéité (16), et qui peut être raccordé à une source de vide.

14. Zone de gaz inerte selon l'une des revendications 1 à 12, caractérisée en ce que les baguettes d'étanchéité (6) présentent dans la partie inférieure une lèvre d'étanchéité (16) longitudinale unique.

15. Zone de gaz inerte selon la revendication 14, caractérisée en ce que la lèvre d'étanchéité (16) est disposée dans une projection sur la bande de matériau (5) sous la zone de raccordement entre la bande de matériau (5) et la baguette d'étanchéité (6).

16. Zone de gaz inerte selon la revendication 14, caractérisée en ce que la lèvre d'étanchéité (16) est disposée dans une projection sur la bande de matériau (5) à côté de la zone de raccord entre la bande de matériau (5) et la baguette d'étanchéité (6).
